(19) **Europäisches Patentamt / European Patent Office / Office européen des brevets**

(11) **EP 4 056 260 A1**

(12) # EUROPEAN PATENT APPLICATION
published in accordance with Art. 153(4) EPC

(43) Date of publication:
**14.09.2022 Bulletin 2022/37**

(21) Application number: **20883798.9**

(22) Date of filing: **15.09.2020**

(51) International Patent Classification (IPC):
**B01D 61/02** (2006.01)   **B01D 61/58** (2006.01)
**C02F 1/44** (2006.01)   **C02F 1/461** (2006.01)

(52) Cooperative Patent Classification (CPC):
**B01D 61/02; B01D 61/58; C02F 1/44; C02F 1/461**

(86) International application number:
**PCT/JP2020/034987**

(87) International publication number:
**WO 2021/090583 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.11.2019 IN 201911045547**

(71) Applicants:
• **NITTO DENKO CORPORATION**
  **Ibaraki-shi**
  **Osaka 567-8680 (JP)**

• **Hydranautics**
  **Oceanside, CA 92058 (US)**

(72) Inventors:
• **TOMI, Yasuhiro**
  **Ibaraki-shi, Osaka 567-8680 (JP)**
• **MANIKANDAN, Vasudevan**
  **Oceanside, California 92058 (US)**

(74) Representative: **Cabinet Beau de Loménie**
  **158, rue de l'Université**
  **75340 Paris Cedex 07 (FR)**

(54) **WATER TREATMENT SYSTEM AND WATER TREATMENT METHOD**

(57)    A water treatment system 100 includes: a filtration device 16 that includes an RO membrane element 12 and an NF membrane element 14, and treats raw water containing sodium chloride by the RO membrane element 12 and the NF membrane element 14 to generate concentrated raw water; and an electrolytic device 18 that is disposed downstream of the filtration device 16 and electrolyzes the concentrated raw water to generate water containing sodium hypochlorite.

FIG.1

EP 4 056 260 A1

**Description**

TECHNICAL FIELD

The present invention relates to a water treatment system and a water treatment method.

BACKGROUND ART

A large amount of water is frequently required in facilities such as power plants. The large amount of water is supplied from, for example, the sea. However, seawater contains microorganisms such as larvae, bacteria, and plankton. These microorganisms attach to pipes and clog the pipes. Therefore, seawater needs to be sterilized before use. However, it is difficult to sterilize a large amount of seawater by adding chemicals from the outside.
Patent Literature 1 discloses a seawater electrolysis system that includes an electrolytic device. The electrolytic device is a device that is intended for electrolyzing seawater to generate sodium hypochlorite as a sterilizing component.

CITATION LIST

Patent Literature

Patent Literature 1: JP 2012-246553 A

SUMMARY OF INVENTION

Technical Problem

The seawater electrolysis system disclosed in Patent Literature 1 further includes concentration means for increasing a chloride ion concentration. Patent Literature 1 discloses a desalination device having an RO membrane as the concentration means.
However, the desalination device having the RO membrane concentrates hardness components such as calcium ions and magnesium ions as well as chloride ions. The hardness components accumulate as scales on, for example, electrodes of the electrolytic device, and a new problem arises that, for example, the lifespan of the electrode is shortened and frequency of maintenance increases. The scales accumulated on the electrode may increase power consumption.
An object of the present invention is to provide technology that reduces power consumption of a water treatment system while preventing the lifespan of an electrode from being shortened and preventing frequency of maintenance from increasing.

Solution to Problem

The present invention is directed to a water treatment system that includes: a filtration device that includes an RO membrane element and an NF membrane element, and treats raw water containing sodium chloride by the RO membrane element and the NF membrane element to generate concentrated raw water; and an electrolytic device that is disposed downstream of the filtration device and electrolyzes the concentrated raw water to generate water containing sodium hypochlorite.
Another aspect of the present invention is directed to a water treatment method that includes: treating raw water containing sodium chloride by an RO membrane element and an NF membrane element to generate concentrated raw water; and electrolyzing the concentrated raw water to generate water containing sodium hypochlorite.

Advantageous Effects of Invention

According to the present invention, power consumption of a water treatment system can be reduced while preventing the lifespan of an electrode from being shortened and preventing frequency of maintenance from increasing.

BRIEF DESCRIPTION OF DRAWINGS

FIG. 1 illustrates a configuration of a water treatment system according to one embodiment of the present invention;
FIG. 2 illustrates a configuration of an electrolytic device;

FIG. 3 illustrates a configuration of a water treatment system according to a modification; and

FIG. 4 illustrates a configuration of a power plant to which the water treatment system shown in FIG. 1 is applied.

DESCRIPTION OF EMBODIMENTS

An embodiment of the present invention will be described below with reference to the drawings. The present invention is not limited to the embodiment described below.

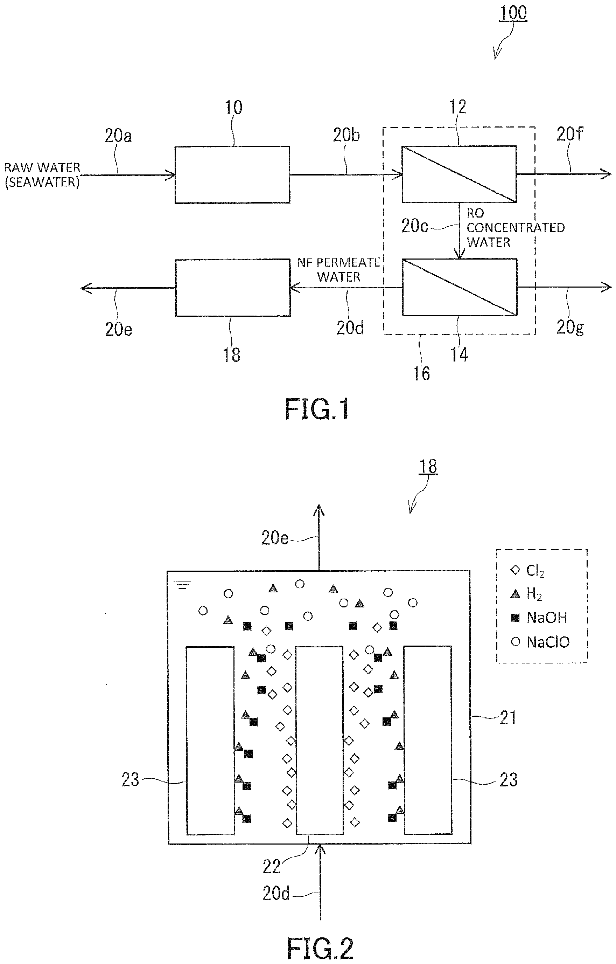

FIG. 1 illustrates a configuration of a water treatment system 100 according to one embodiment of the present invention. The water treatment system 100 includes a pretreatment device 10, a filtration device 16, and an electrolytic device 18. The water treatment system 100 is configured to generate water containing sodium hypochlorite from raw water containing sodium chloride.

The kind of the raw water containing sodium chloride is not particularly limited. Examples of the raw water containing sodium chloride include seawater, lake water, brackish water, and industrial wastewater. The raw water containing sodium chloride is typically seawater. A large amount of seawater is frequently used in facilities such as power plants. The greater an amount of water which is used is, the greater the benefit from the water treatment system 100 of the present embodiment is. Application of the water containing sodium hypochlorite is not particularly limited. The water containing sodium hypochlorite can be used for sterilizing various kinds of water such as cooling water for power plants, ballast water for ships, and water in tanks of aquariums.

The pretreatment device 10, the filtration device 16, and the electrolytic device 18 are connected in this order by flow paths 20a, 20b, 20c, 20d, and 20e. Raw water flows through the pretreatment device 10, the filtration device 16, and the electrolytic device 18 in this order. Each of the flow paths 20a, 20b, 20c, 20d, and 20e is formed by one pipe or a plurality of pipes. A device such as a pump, a valve, or a sensor may be disposed in each of the flow paths 20a, 20b, 20c, 20d, and 20e as appropriate.

The pretreatment device 10 is disposed upstream of the filtration device 16 in the raw water flowing direction, and treats the raw water containing sodium chloride. The pretreatment device 10 removes, from the raw water containing sodium chloride, a solute, having a large particle size, such as a solid substance, bacteria, and a colloid. The pretreatment device 10 contributes to elongation of the maintenance cycle and the lifespan of the filtration device 16. Examples of the pretreatment device 10 include a sedimentation device, a sand filtration device, a diatomite filtration device, a mesh filtration filter, a microfiltration (MF) membrane element, and an ultrafiltration (UF) membrane element. One member selected therefrom or a combination of two or more members selected therefrom can be used as the pretreatment device 10.

The flow path 20a is connected to the inlet of the pretreatment device 10. The raw water flows into the pretreatment device 10 through the flow path 20a. The outlet of the pretreatment device 10 and the inlet of the filtration device 16 are connected by the flow path 20b. The raw water is treated by the pretreatment device 10, and thereafter flows into the filtration device 16 through the flow path 20b.

The filtration device 16 includes a reverse osmosis (RO) membrane element 12 and a nanofiltration (NF) membrane element 14. The raw water containing sodium chloride is treated by the RO membrane element 12 and the NF membrane element 14 to generate concentrated raw water. The concentrated raw water is supplied to the electrolytic device 18. The filtration device 16 is a membrane filtration device.

The RO membrane element 12 rejects all kinds of solutes that include monovalent ions and divalent ions. The NF membrane element 14 allows a part of monovalent ions to permeate therethrough while rejecting divalent ions. Therefore, when the RO membrane element 12 and the NF membrane element 14 are used in combination, the sodium chloride concentration can be selectively increased, and the concentration of divalent ions and the chemical oxygen demand (COD) can be selectively reduced. Examples of the divalent ion include a calcium ion, a magnesium ion, and a sulfate ion. The concentrated raw water has a higher sodium chloride concentration (mg/liter), a lower divalent ion concentration (mg/liter), and lower COD as compared with the raw water (for example, seawater) which has not been treated yet by the filtration device 16. The divalent ion concentration is at least one selected from the group consisting of a calcium ion concentration, a magnesium ion concentration, and a sulfate ion concentration. Furthermore, the concentrated raw water has a higher total dissolved solid (TDS) concentration (mg/liter) as compared with the raw water which has not been treated yet by the filtration device 16.

In an exemplary case, the sodium chloride concentration of the concentrated raw water may be equal to or greater than 1 times the sodium chloride concentration of the raw water (for example, seawater) which has not been treated yet by the filtration device 16 and equal to or less than 3 times the sodium chloride concentration thereof, and may be greater than 1 times the sodium chloride concentration thereof and equal to or less than 3 times the sodium chloride concentration thereof. The calcium ion concentration of the concentrated raw water may be equal to or greater than 0.2 times the calcium ion concentration of the raw water which has not been treated yet by the filtration device 16 and equal to or less than 1 times the calcium ion concentration thereof, and may be equal to or greater than 0.2 times the calcium ion concentration thereof and less than 1 times the calcium ion concentration thereof. The magnesium ion concentration of the concentrated raw water may be equal to or greater than 0.2 times the magnesium ion concentration of the raw water which has not been treated yet by the filtration device 16 and equal to or less than 1 times the magnesium ion concentration thereof, and may be equal to or greater than 0.2 times the magnesium ion concentration thereof and less than 1 times the magnesium ion concentration thereof. The TDS concentration of the concentrated raw water may be equal to or greater than 0.8 times the TDS concentration of the raw water which has not been treated yet by the filtration device 16 and equal to or less than 3 times the TDS concentration thereof, and may be greater than 1 times the TDS concentration thereof and equal to or less than 3 times the TDS concentration thereof. The concentration of the hardness component as $CaCO_3$ in the concentrated raw water may be equal to or greater than 0.2 times the concentration of the hardness component in the raw water which has not been treated yet by the filtration device 16 and equal to or less than 1 times the concentration of the hardness component therein, and may be equal to or greater than 0.2 times the concentration of the hardness component therein and less than 1 times the concentration of the hardness component therein.

In the present embodiment, the positional relationship between the RO membrane element 12 and the NF membrane element 14 is determined such that the raw water containing sodium chloride is treated by the RO membrane element 12, and the concentrated water that is discharged from the RO membrane element 12 is treated by the NF membrane element 14. The permeate water that is discharged from the NF membrane element 14 is supplied to the electrolytic device 18 as the concentrated raw water. That is, the RO membrane element 12 is disposed on the upstream side and the NF membrane element 14 is disposed on the downstream side in the raw water flowing direction. The flow path 20b is connected to the raw water inlet of the RO membrane element 12. The flow path 20c is connected to the concentrated water outlet of the RO membrane element 12 and the raw water inlet of the NF membrane element 14. The concentrated water that is discharged from the RO membrane element 12 flows into the NF membrane element 14 through the flow path 20c. In such a configuration, the sodium chloride concentration can be assuredly increased, and the concentration of the divalent ions such as calcium ions, magnesium ions, or sulfate ions can be assuredly reduced. When an existing system has an RO membrane element and an electrolytic device, the water treatment system according to the present embodiment can be configured without major design change.

The pressure of the concentrated water that is discharged from the RO membrane element 12 is high. Therefore, even if a booster pump is not provided in the flow path 20c, the concentrated water that is discharged from the RO membrane element 12 can be supplied to and treated by the NF membrane element 14 without increasing the pressure of the concentrated water. That is, according to the present embodiment, cost for the facilities and energy can be saved. However, a pump may be disposed in the flow path 20c.

In the description herein, the "NF membrane" represents such a separation membrane that the sodium chloride rejection rate is made equal to or greater than 5% and less than 93% when the aqueous sodium chloride solution, having a concentration of 2000 mg/liter, is filtered under the condition that the operation pressure is 0.7 MPa, pH is 6.5 to 8, the collection rate is 15%, and the temperature is 25°C. The "RO membrane" represents such a separation membrane that the sodium chloride rejection rate is made equal to or greater than 93% when the aqueous sodium chloride solution, having a concentration of 2000 mg/liter, is filtered under the condition that the operation pressure is 1.5 MPa, pH is 6.5 to 8, the collection rate is 15%, and the temperature is 25°C.

The monovalent ion rejection rate can be measured using the following method in compliance with JIS K 3805 (1990). Aqueous NaCl solution is caused to permeate a separation membrane having a predetermined size at an operation pressure of 0.7 MPa or 1.5 MPa. After the preparation process for 30 minutes has been ended, an electric conductivity measurement device is used to measure electric conductivity of each of the permeate liquid and the supplied liquid. Based on the result thereof and a calibration curve (concentration - electric conductivity), the NaCl rejection rate can be calculated as the monovalent ion rejection rate according to the following equation. Instead of the electric conductivity being measured, ion chromatography may be used to measure the concentration.

$$\cdot \text{NaCl rejection rate (\%)} = (1 - (\text{NaCl concentration of permeate liquid} / \text{NaCl concentration of supplied liquid})) \times 100$$

The structure of each of the RO membrane element 12 and the NF membrane element 14 is not particularly limited. Examples of the structure of each of the RO membrane element 12 and the NF membrane element 14 include a spiral structure, a hollow fiber structure, a tubular structure, and a frame-and-plate type structure. The RO membrane element 12 and the NF membrane element 14 may be each structured as a single separation membrane element or a separation membrane module which includes a plurality of separation membrane elements.

The flow path 20f is connected to the permeate water outlet of the RO membrane element 12. The permeate water discharged from the RO membrane element 12 is clean fresh water, and has high utility. The permeate water is introduced through the flow path 20f into a predetermined place where it is to be used. The flow path 20g is connected to the concentrated water outlet of the NF membrane element 14. The concentrated water that is discharged from the NF membrane element 14 is introduced through the flow path 20g into a disposal place such as the sea.

The electrolytic device 18 is disposed downstream of the filtration device 16, and electrolyzes the concentrated raw water to generate the water containing sodium hypochlorite. The outlet of the filtration device 16 and the inlet of the electrolytic device 18 are connected by the flow path 20d. The concentrated raw water is supplied from the filtration device 16 through the flow path 20d to the electrolytic device 18. The flow path 20e is connected to the outlet of the electrolytic device 18. The water containing sodium hypochlorite is supplied to the outside through the flow path 20e.

FIG. 2 illustrates a configuration of the electrolytic device 18. The electrolytic device 18 includes an electrolytic cell 21, an anode 22, and cathodes 23. The anode 22 and each cathode 23 oppose each other, and are arranged at a predetermined interval in the electrolytic cell 21. A DC power supply (not shown) is connected to the anode 22 and the cathodes 23. The number of electrode pairs each including the anode 22 and the cathode 23 may be one or plural. In the example shown in FIG. 2, a single anode 22 and a plurality of the cathodes 23 are disposed. The following reactions occur on the surface of the anode 22 and the surfaces of the cathodes 23, and in the electrolytic cell 21. That is, chlorine is generated on the surface of the anode 22. Hydrogen and sodium hydroxide are generated on the surfaces of the cathodes 23. Chlorine and sodium hydroxide react with each other in the electrolytic cell 21 to generate sodium hypochlorite. Hydrogen that is a by-product is diluted with air and then released into the atmosphere.

Anodic reaction:

$$2Cl \rightarrow Cl_2 + 2e$$

Cathodic reaction:

$$2Na^+ + 2H_2O + 2e{-} \rightarrow 2NaOH + H_2$$

Reaction in the electrolytic cell:

$$2NaOH + Cl_2 \rightarrow +NaCl + NaClO + H_2O$$

Total reaction:

$$NaCl + H_2O + 2F \rightarrow NaClO + H_2$$

The following effects can be obtained by the water treatment system 100 of the present embodiment.

The electrolytic device 18 electrolyzes the concentrated raw water. The concentrated raw water has a higher sodium chloride concentration and a higher TDS concentration as compared with the raw water which has not been treated yet by the filtration device 16. Therefore, the water that contains sodium hypochlorite at a high concentration can be generated by the electrolytic device 18. Electric power that is consumed for generating a unit weight of sodium hypochlorite is also reduced. The inventors of the present invention estimate that the water treatment system 100 of the present embodiment is expected to reduce power consumption by 10% to 15% as compared with a case where seawater is electrolyzed by an electrolytic device.

Since the NF membrane element 14 sufficiently removes the COD component, the concentrated raw water has the low COD. The low COD also contributes to generation of the water containing sodium hypochlorite at a high concentration and reduction of power consumption. When the COD is high, sodium hypochlorite generated by the electrolytic device 18 is immediately consumed by the COD component. The lower the COD is, the less an amount of sodium hypochlorite to be consumed by the COD component can be. This effect is particularly significant when the water treatment system 100 is used in a coastal area where the COD is high.

The concentration of divalent ions in the concentrated raw water is sufficiently reduced due to the function of the NF membrane element 14. Therefore, scales are inhibited from accumulating on the electrodes of the electrolytic device 18. Thus, the lifespan of the electrodes is elongated, and the frequency of maintenance of the electrolytic device 18 is reduced. For example, the frequency of maintenance may be reduced from once a month to once every three months. The reduced frequency of maintenance is also expected to improve production efficiency.

According to the present embodiment, special chemicals need not be added to the raw water, and additional sodium chloride need not be added to the raw water. However, special chemicals and sodium chloride may be added to the raw water.

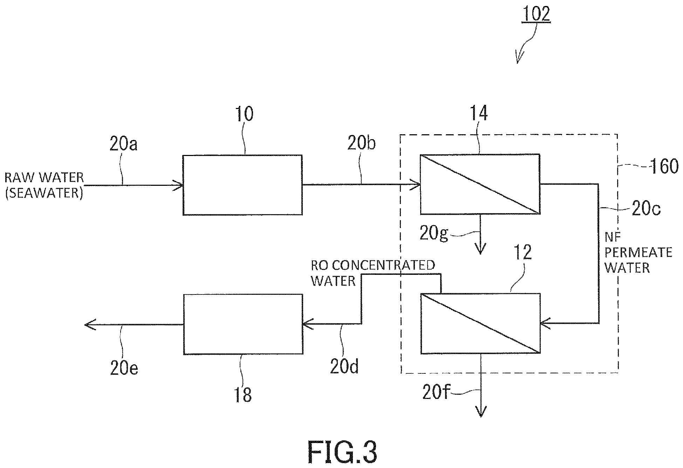

FIG. 3 illustrates a configuration of a water treatment system 102 according to a modification. The water treatment system 102 includes a filtration device 160 instead of the filtration device 16. The filtration device 160 has the RO membrane element 12 and the NF membrane element 14. The filtration device 16 shown in FIG. 1 and the filtration device 160 shown in FIG. 3 are different from each other in the positional relationship between the RO membrane element 12 and the NF membrane element 14.

In this modification, the positional relationship between the RO membrane element 12 and the NF membrane element 14 is determined such that the raw water containing sodium chloride is treated by the NF membrane element 14, and permeate water discharged from the NF membrane element 14 is treated by the RO membrane element 12. The concentrated water that is discharged from the RO membrane element 12 is supplied as the concentrated raw water to the electrolytic device 18. That is, the NF membrane element 14 is disposed on the upstream side and the RO membrane element 12 is disposed on the downstream side in the raw water flowing direction. The flow path 20b is connected to the raw water inlet of the NF membrane element 14. The flow path 20c is connected to the permeate water outlet of the NF membrane element 14 and the raw water inlet of the RO membrane element 12. The permeate water discharged from the NF membrane element 14 flows through the flow path 20c into the RO membrane element 12. Also in such a configuration, the sodium chloride concentration can be assuredly increased, and the concentration of divalent ions such as calcium ions, magnesium ions, or sulfate ions can be assuredly reduced.

The rate of effectively utilized water in the water treatment system 102 according to this modification is higher than the rate of effectively utilized water in the water treatment system 100 shown in FIG. 1. The rate of effectively utilized water is a rate of the sum of the concentrated raw water to be supplied to the electrolytic device 18 and the permeate water discharged from the RO membrane element 12, relative to the raw water containing sodium chloride.

When the NF membrane element 14 is disposed on the downstream side as in the water treatment system 100 shown in FIG. 1, since the TDS concentration of the concentrated water that is discharged from the RO membrane element 12 is high, the NF membrane element 14 is to be prevented from operating at a high collection rate. Meanwhile, in the water treatment system 102 according to this modification, the NF membrane element 14 is disposed on the upstream side. Since the NF membrane element 14 allows monovalent ions to permeate therethrough, increase of the osmotic pressure of the concentrated water is small. Therefore, the NF membrane element 14 is allowed to operate at a high collection rate (for example, a collection rate higher than 70%). As a result, a rate of water to be effectively utilized is increased, and power saving effect can be expected.

However, the water treatment system 102 according to this modification requires a booster pump to be disposed in the flow path 20c. A booster pump may not necessarily be disposed in the flow path 20c in the water treatment system 100 shown in FIG. 1. The water treatment system 100 shown in FIG. 1 is advantageous from the viewpoint of the power saving effect of the electrolytic device 18. Therefore, either the system 100 or the system 102 can be selected in comprehensive consideration of an energy reduction effect and cost for the facilities.

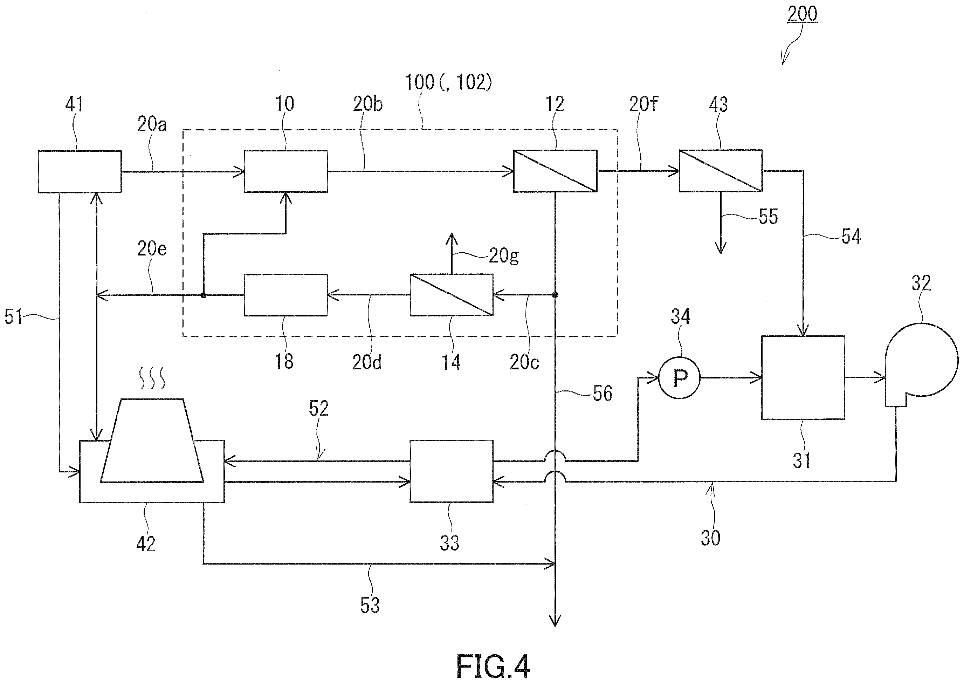

FIG. 4 illustrates a configuration of a power plant 200 to which the water treatment system 100 shown in FIG. 1 is applied. Instead of the water treatment system 100 shown in FIG. 1, the water treatment system 102 shown in FIG. 3 is also applicable.

The power plant 200 includes a Rankine cycle 30, a cooling facility 42, and the water treatment system 100.

The Rankine cycle 30 includes a boiler 31, a turbine 32, a condenser 33, and a pump 34. The boiler 31 is a steam generator that generates high-pressure steam by using an energy source such as thermal power and nuclear power. The turbine 32 is driven by the high-pressure steam, to generate electric power. The steam is cooled and liquefied by the condenser 33 (steam condenser). The liquid-phase water is pressurized by the pump 34 and is returned to the boiler 31.

The cooling facility 42 is, for example, a cooling tower. Cooling water such as seawater is supplied to the cooling facility 42 through an intake 41 and a flow path 51. Used cooling water is introduced through a drainage channel 53 to a disposal place such as the sea. The cooling facility 42 and the condenser 33 of the Rankine cycle 30 are connected by a cooling circuit 52. The cooling water circulates in the cooling circuit 52, thereby cooling the steam in the condenser 33. The cooling water in the cooling circuit is cooled by seawater in the cooling facility 42.

Seawater is supplied as the raw water containing sodium chloride through the intake 41 to the water treatment system 100. In the electrolytic device 18, the water containing sodium hypochlorite is generated. The water containing sodium hypochlorite is supplied through the flow path 20e to each of the intake 41, the cooling facility 42, and the pretreatment device 10. At least a part of the concentrated water that is discharged from the RO membrane element 12 is introduced through the flow path 20c to the NF membrane element 14. The remaining part of the concentrated water that is discharged from the RO membrane element 12 is introduced through a flow path 56 to a disposal place such as the sea.

The water treatment system 100 generates pure water as well as the water containing sodium hypochlorite. The pure water can be supplied to the Rankine cycle 30 as working fluid. The power plant 200 shown in FIG. 4 includes an additional RO membrane element 43. The permeate water outlet of the RO membrane element 12 and the raw water inlet of the additional RO membrane element 43 are connected by the flow path 20f. The permeate water discharged from the RO membrane element 12 is further treated by the additional RO membrane element 43. The permeate water discharged from the additional RO membrane element 43 is supplied as working fluid through a flow path 54 to the Rankine cycle 30. The concentrated water that is discharged from the additional RO membrane element 43 is introduced through a flow path 55 into a disposal place such as the sea.

A lot of pure water is required by a Rankine cycle of a power plant. The power plant may include an RO membrane element in order to produce pure water. Therefore, the water treatment system 100 according to the present embodiment may be introduced merely by making minor modifications to existing facilities.

Even when the power plant includes the RO membrane element for producing pure water, all of concentrated water that is discharged from the RO membrane element is discarded into the sea, lakes, or the like. Seawater is supplied directly to an electrolytic device.

Meanwhile, in the power plant 200 shown in FIG. 4, the concentrated water that is discharged from the RO membrane element 12 is used for producing the water containing sodium hypochlorite. Therefore, the water intake from the intake 41 can be reduced. Both the concentrated water and the permeate water that are discharged from the RO membrane element 12 can be effectively utilized.

The water treatment systems 100 and 102 according to the present embodiment are applicable to various facilities such as ships, aquariums, and factories as well as the power plant 200. For example, a ship may be provided with a desalination device for producing water for daily use and an electrolytic device for sterilizing ballast water. When the desalination device and the electrolytic device are connected by the NF membrane element, the water treatment system can be configured in the ship in a cost efficient manner. Generating water containing sodium hypochlorite at a high concentration is very useful for ships which may navigate the sea in which the COD is high.

INDUSTRIAL APPLICABILITY

The water treatment system according to the present invention is useful to various facilities such as power plants, ships, aquariums, and factories.

**Claims**

1. A water treatment system comprising:

   a filtration device that includes an RO membrane element and an NF membrane element, and treats raw water containing sodium chloride by the RO membrane element and the NF membrane element to generate concentrated raw water; and
   an electrolytic device that is disposed downstream of the filtration device and electrolyzes the concentrated raw water to generate water containing sodium hypochlorite.

2. The water treatment system according to claim 1, wherein

   a positional relationship between the RO membrane element and the NF membrane element is determined such that the raw water containing sodium chloride is treated by the RO membrane element, and concentrated water that is discharged from the RO membrane element is treated by the NF membrane element, and
   permeate water discharged from the NF membrane element is supplied as the concentrated raw water to the electrolytic device.

3. The water treatment system according to claim 1, wherein

   a positional relationship between the RO membrane element and the NF membrane element is determined such that the raw water containing sodium chloride is treated by the NF membrane element, and permeate water discharged from the NF membrane element is treated by the RO membrane element, and
   concentrated water that is discharged from the RO membrane element is supplied as the concentrated raw water to the electrolytic device.

4. The water treatment system according to any one of claims 1 to 3, wherein the raw water containing sodium chloride is seawater.

5. The water treatment system according to any one of claims 1 to 4, further comprising a pretreatment device disposed upstream of the filtration device.

6. A water treatment method comprising:

treating raw water containing sodium chloride by an RO membrane element and an NF membrane element to generate concentrated raw water; and

electrolyzing the concentrated raw water to generate water containing sodium hypochlorite.

7. The water treatment method according to claim 6, wherein, when the concentrated raw water is generated, the raw water containing sodium chloride is treated by the RO membrane element, concentrated water that is discharged from the RO membrane element is treated by the NF membrane element, and permeate water discharged from the NF membrane element is supplied as the concentrated raw water to an electrolytic device.

8. The water treatment method according to claim 6, wherein, when the concentrated raw water is generated, the raw water containing sodium chloride is treated by the NF membrane element, permeate water discharged from the NF membrane element is treated by the RO membrane element, and concentrated water that is discharged from the RO membrane element is supplied as the concentrated raw water to an electrolytic device.

9. The water treatment method according to any one of claims 6 to 8, wherein the raw water containing sodium chloride is seawater.

FIG.1

FIG.2

102

10

20a

RAW WATER
(SEAWATER)

20b

14

160

20c

20g

NF
PERMEATE
WATER

RO CONCENTRATED
WATER

12

20e

18

20d

20f

FIG.3

FIG.4

## INTERNATIONAL SEARCH REPORT

| International application No. |
| --- |
| PCT/JP2020/034987 |

### A. CLASSIFICATION OF SUBJECT MATTER
Int. Cl. B01D61/02(2006.01)i, B01D61/58(2006.01)i, C02F1/44(2006.01)i,
C02F1/461(2006.01)i
FI: C02F1/44 A, C02F1/461 Z, B01D61/02 500, B01D61/58
According to International Patent Classification (IPC) or to both national classification and IPC

### B. FIELDS SEARCHED
Minimum documentation searched (classification system followed by classification symbols)
Int. Cl. B01D61/02, B01D61/58, C02F1/44, C02F1/461

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | KR 10-0874269 B1 (TECHNOLOGY WINNERS CO., LTD.) 16 December 2008, claims, paragraphs [0124], [0125], fig. 4, 5, claims, paragraphs [0020], [0033], [0034], fig. 4, 5 | 1-9<br>1-9 |
| X | US 2019/0270660 A1 (NLB WATER, LLC) 05 September 2019, claims, paragraphs [0002]-[0005], [0027]-[0048], fig. 1 | 1, 3, 5-6, 8 |
| X | US 2018/0071682 A1 (VETCO GRAY SCANDINAVIA AS) 15 March 2018, claims, paragraphs [0010], [0030]-[0041], fig. 3, ) | 1-9 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 12.11.2020 | 24.11.2020 |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |
| --- | --- |

Form PCT/ISA/210 (second sheet) (January 2015)

**INTERNATIONAL SEARCH REPORT**

| International application No. |
| --- |
| PCT/JP2020/034987 |

C (Continuation).　　DOCUMENTS CONSIDERED TO BE RELEVANT

| Category* | Citation of document, with indication, where appropriate, of the relevant passages | Relevant to claim No. |
| --- | --- | --- |
| X<br>Y | CN 110078272 A (ZHEJIANG TIANXINGJIAN WATER CO., LTD.) 02 August 2019, claims, paragraphs [0032]-[0041], fig. 7, 8 | 1-2, 4, 6-7, 9<br>5 |
| Y | Microfilm of the specification and drawings annexed to the request of Japanese Utility Model Application No. 105101/1984 (Laid-open No. 22595/1986) (HITACHI PLANT ENGINEERING & CONSTRUCTION CO., LTD.) 10 February 1986, claims, p. 5, lines 1-6, p. 6, line 20 to p. 7, line 12, fig. 1, examples | 1-9 |
| Y | JP 55-3823 A (KOBE STEEL, LTD.) 11 January 1980, claims, p. 2, upper right column, line 14 to p. 3, upper right column, line 10 | 1-9 |

Form PCT/ISA/210 (continuation of second sheet) (January 2015)

**INTERNATIONAL SEARCH REPORT**
Information on patent family members

International application No.

PCT/JP2020/034987

| Patent Documents referred to in the Report | Publication Date | Patent Family | Publication Date |
|---|---|---|---|
| KR 10-0874269 B1 | 16.12.2008 | (Family: none) | |
| US 2019/0270660 A1 | 05.09.2019 | WO 2019/168804 A1 claims, paragraphs [0002]-[0005], [0027]-[0048], fig. 1 | |
| US 2018/0071682 A1 | 15.03.2018 | WO 2016/146520 A1 claims, p. 3, lines 6-11, p. 6, line 17 to p. 9, line 7, fig. 3 EP 3268317 A1 NO 20150328 A1 AU 2016232367 A1 BR 112017018241 A2 | |
| CN 110078272 A | 02.08.2019 | (Family: none) | |
| JP 61-22595 U1 | 10.02.1986 | (Family: none) | |
| JP 55-3823 A | 11.01.1980 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012246553 A